# EUROPEAN PATENT SPECIFICATION

(11) **EP 1 841 975 B1**
(45) Date of publication and mention of the grant of the patent: **12.08.2009**
(21) Application number: 05810053.8
(22) Date of filing: 28.11.2005
(51) Int. Cl.: F16C 32/06, B23K 26/38

(54) **GAS BEARINGS (LASER)**
GASLAGER (LASER)
PALIERS A GAZ (LASER)

(30) Priority: 13.01.2005 SE 0500093
(43) Date of publication of application: 10.10.2007
(73) Proprietor: Lind Finance & Development AB, 411 18 Göteborg (SE)
(72) Inventor: LIND, Björn, S-411 18 Göteborg (SE)
(74) Representative: Winblad, Hans Peter
(86) International application number: PCT/SE2005/001788
(87) International publication number: WO 2006/075939

(56) References cited:
- EP-A- 0 672 839
- EP-A- 0 708 262
- EP-A2- 0 237 627
- DE-C1- 4 436 156
- JP-A- 6 315 784
- US-A- 5 110 520
- PATENT ABSTRACTS OF JAPAN vol. 1995, no. 02 31 March 1995 & JP 06 315 784 A (NTN CORP) 15 November 1994

## Description

The present invention relates to a method for gas bearings according to the precharacterizing clause of Patent Claim 1.

US 5110520 A discloses a method for producing holes to the bearing surface of a gas bearing, wherein the method includes impregnating a porous gas bearing with resin in the pores of the porous material, applying solvent to the porous material followed by measuring.

Gas bearings are well known within the art and are described in the German publication DE 44 36 156 and the European publication EP 0 237 627, for example. Gas bearings are used at high rotational speeds between the bearing parts, for example a spindle shaft and the bearing surface supporting it. In order to obtain good functioning of a gas bearing, it is desirable to have a material combination between the relatively rotating parts which does not damage the parts when they make contact with one another during rotation and makes partial melting as a result of the frictional heat developed impossible. In order to avoid this disadvantage, use is made of a non-metallic material in the bearing surface, for example graphite. In this connection, it is known to use porous graphite throughout the bearing surface, which affords good gas permeability and thus good functioning, but the weakness is that the porous graphite has poor wear resistance, which results in the gas bearing being deformed rapidly as a consequence of the contact between the shaft and the bearing surface.

In order to eliminate this weakness, the graphite bearing is designed with a wear-resistant bearing surface made of solid graphite, for example, through which gas-permeable holes are made, which communicate with the gas-generating source via the graphite bearing part located outside the bearing surface.

In the manufacture of bearings of this type, the holes are produced in a suitable way by drilling or with the aid of a high-energy beam, for example a focussed laser beam. The use of a high-energy beam makes it possible to make holes directly in the bearing surface in the case of shaft bearings located on the outside. One difficulty of the hole-making process, however, is deciding how many holes the bearing surface concerned is to have in order to meet the necessary requirements. The "calculation" of the number of holes is based entirely on experience, which is of course to a great extent also influenced by the diameter and length and repeatability of the holes, which means that in some cases too few holes and in some cases too many holes are made in a bearing. Both eventualities mean that the bearing cannot function optimally. A way of being able to decide more accurately in advance how many holes the bearing in question requires in order to obtain the desired flow has not yet seen the light of day.

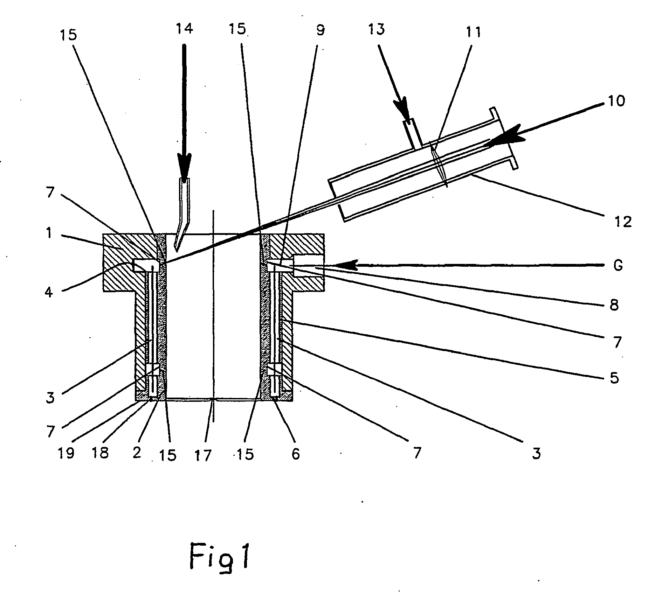

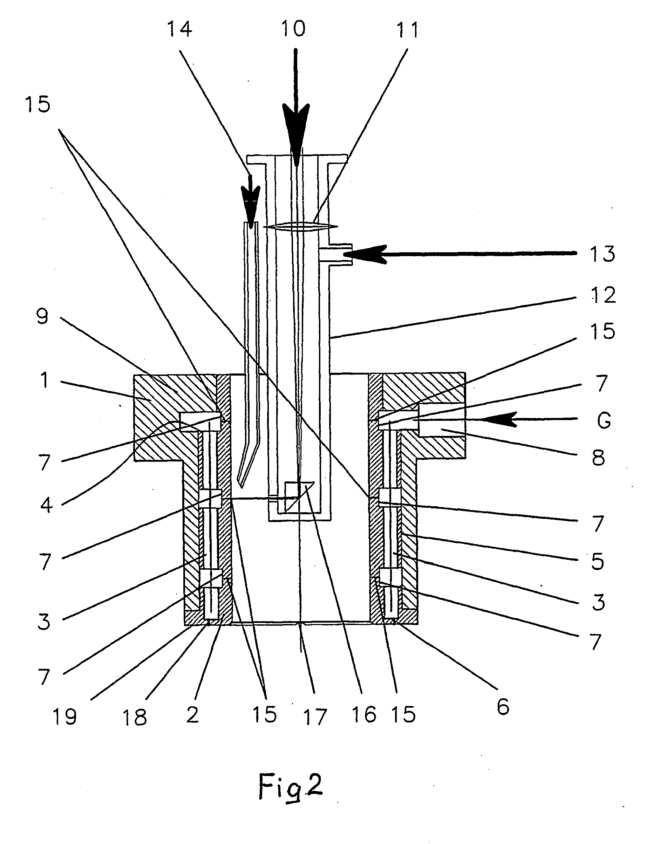

However, this is possible by virtue of the invention having been provided with the characteristics indicated in the patent claims. The invention will be described in greater detail in the form of examples with reference to the drawing, in which Figures 1 and 2 show different ways of making holes in the bearing surface with the aid of a high-energy beam.

In the figures, 1 designates a bearing housing in which a shaft bearing 2 is accommodated. The bearing 1 consists of a material suitable for gas bearings, for example graphite, in which the bearing surface has been made wear-resistant by the use of solid graphite, for example. The bearing 2 has a number of axial bores 3, distributed around the bearing, starting from a shoulder 4 of an enlarged part 5 of the bearing and ending in the latter at 6. Turned cavities 7, which form thinner regions of the gas bearing material inside its wear-resistant bearing surface, extend from the bores 3.

Gas under pressure (indicated by G) is supplied via a connection 8 to a circular turned cavity 9 with which the bores 3 communicate. Figure 1 indicates how a hole 15 is made in the gas bearing and through the wear-resistant bearing surface made of solid graphite, for example, with the aid of a high-energy beam, in this case a focussed laser beam 10. The laser beam 10 is refracted by a lens 11 in a protective pipe 12, which is supplied via 13 with protective air in order to prevent the particles reaching the lens. Air is supplied at 14 in order to blow away gasified material when the holes are made. The holes are indicated in the figures by the designation 15. In the case of this method, holes 15 can scarcely be made other than in the axially outer parts of the bearing.

Figure 2 shows an embodiment in which the high-energy beam is directed towards the bearing surface via a deflection by means of a prism 16, for example, which makes it possible to make gas-permeable holes in the central region of the bearing as well.

By virtue of the methods shown, it is now possible to make a desired number of holes located in freely selected locations in the bearing in a flexible way. By virtue of this, a method is made possible in which, with the aid of a high-energy beam directed towards the bearing surface, a certain number of first holes smaller than the final number of holes calculated from experience are made in the bearing surface with desired positioning. This makes a primary airflow through the bearing surface possible. This preliminary airflow is measured and, on the basis of the value obtained in this connection, the exact number of additional second holes with the same characteristics can be calculated in order that the necessary airflow for the bearing will be obtained. The additional calculated number of second holes is made in order that the desired necessary airflow will be obtained.

During implementation, half the number of holes estimated from the outset from experience are suitably made. The smaller number of first holes are suitably positioned in a uniformly distributed manner over 360 degrees along one or more circular lines in the bearing surface, after which the calculated number of additional second holes are made with corresponding positioning along one or more circular lines displaced axially in relation to the first holes. A simple method for carrying this out is for the bearing surface in which the gas-permeable channels are to be made to be rotated stepwise and displaced axially in relation to the stationary high-energy beam.

In the event that the bearing according to the invention is a combined radial and axial bearing, channels 18 are formed, extending between the bores 3 and the axial bearing surface 19, and are fed with "radial bearing air" via the bores 3. Both "radial bearing air" and "axial bearing air" are evacuated from the region between the radial bearing surface and the axial bearing surface at a countersink 17 made in the axial bearing surface.

## Claims

1. Method for gas bearings comprising two relatively rotating parts, one part of which consists of a spindle shaft and the other part of which is a bearing with a bearing surface of solid graphite and made from a material through which gas can be conducted to the bearing gap, for producing holes through the bearing surface, conducting gas to the bearing, comprising the steps:
(a) with the aid of a high-energy beam directed towards the bearing surface, a certain number of first holes smaller than the final number of holes calculated from experience are made in the bearing surface to make a primary airflow through this part of the bearing surface possible;
(b) the preliminary airflow is measured;
(c) on the basis of the measured airflow, the exact number necessary of additional second holes to be made in order to obtain the desired necessary airflow is calculated;
(d) the calculated number of additional second holes are made in the bearing surface.

2. Method according to Claim 1, **characterized in that** the smaller number of first holes is of the order of half the calculated number.

3. Method according to Claim 1 or 2, **characterized in that** the smaller number of first holes are made in a uniformly distributed manner over 360 degrees along one or more circular lines in the bearing surface, and the number of additional second holes with the same characteristics are made with similar positioning along one or more circular lines displaced axially in relation to the first holes.

4. Method according to Claim 3, **characterized in that that** part of the bearing surface in which the gas-permeable channels are to be made is rotated and displaced axially in relation to a stationary high-energy beam.

5. Method according to any one of the preceding claims, **characterized in that** the high-energy beam is a focussed laser beam directed directly towards the bearing surface.

6. Method according to any one of Claims 1-4, **characterized in that** the high-energy beam is a focussed laser beam directed towards the bearing surface via a deflection by means of a prism, for example.

## Patentansprüche

1. Verfahren für Gaslager, die zwei Relativdrehteile umfassen, wobei ein Teil davon aus einer Spindelwelle besteht und der andere Teil davon ein Lager mit einer Lageroberfläche aus festem Graphit ist und aus einem Material gefertigt ist, durch das Gas zum Lagerspalt geleitet werden kann, zum Herstellen von Öffnungen durch die Lageroberfläche, die Gas zum Lager leiten, umfassend die Schritte:
(a) Einbringen, mit Hilfe eines Hochenergiestrahls, der auf die Lageroberfläche gerichtet ist, einer bestimmten Anzahl von ersten Öffnungen, die kleiner als die endgültige Anzahl von Öffnungen, die aus der Erfahrung berechnet wird, ist, in die Lageroberfläche, um einen primären Luftstrom durch diesen Teil der Lageroberfläche zu ermöglichen;
(b) Messen des primären Luftstroms;
(c) Berechnen, auf der Basis des gemessenen Luftstroms, der exakten Anzahl von notwendigen zusätzlichen zweiten Öffnungen, die zu fertigen sind, um den gewünschten Luftstrom zu erhalten;
(d) Einbringen der berechneten Anzahl von zusätzlichen zweiten Öffnungen in die Lageroberfläche.

2. Verfahren nach Anspruch 1, **dadurch gekennzeichnet, dass** sich die kleinere Anzahl von ersten Öffnungen im Bereich der Hälfte der berechneten Anzahl befindet.

3. Verfahren nach Anspruch 1 oder 2, **dadurch gekennzeichnet, dass** die kleinere Anzahl von ersten Öffnungen auf eine gleichförmig verteilte Weise über 360° entlang einer oder mehrerer kreisförmiger Linien in die Lageroberfläche eingebracht werden, und die Anzahl von zusätzlichen zweiten Öffnungen mit derselben Charakteristik mit einer ähnlichen Positionierung entlang einer oder mehrer kreisförmiger Linien, die bezüglich der ersten Öffnungen axial versetzt sind, eingebracht werden.

4. Verfahren nach Anspruch 3, **dadurch gekennzeichnet, dass** ein Teil der Lageroberfläche, in der die gasdurchlässigen Kanäle auszubilden sind, bezüglich eines stationären Hochenergiestrahls axial gedreht und versetzt ist.

5. Verfahren nach einem der vorhergehenden Ansprüche, **dadurch gekennzeichnet, dass** der Hochenergiestrahl ein fokussierte Laserstrahl ist, der direkt auf die Lageroberfläche gerichtet ist.

6. Verfahren nach einem der Ansprüche 1 bis 4, **dadurch gekennzeichnet, dass** der Hochenergiestrahl ein fokussierter Laserstrahl ist, der über eine Ablenkung, beispielsweise mittels eines Prismas, auf die Lageroberfläche gerichtet ist.

## Revendications

1. Procédé destiné à des paliers à gaz comprenant deux parties relativement rotatives, dont une partie consiste en un axe de broche et l'autre partie est un palier avec une surface de palier en graphite massif et fait d'un matériau à travers lequel du gaz peut être dirigé vers l'espace de palier, pour produire des trous à travers la surface de palier, conduisant du gaz vers le palier, comprenant les étapes :
(a) à l'aide d'un faisceau de haute énergie dirigé vers la surface de palier, un certain nombre de premiers trous inférieur au nombre final de trous calculé par expérience est réalisé dans la surface de palier pour pouvoir faire passer un écoulement d'air primaire à travers cette partie de la surface de palier ;
(b) l'écoulement d'air préliminaire est mesuré ;
(c) sur la base de l'écoulement d'air mesuré, le nombre exact nécessaire de seconds trous supplémentaires qu'on doit réaliser afin d'obtenir le débit d'air nécessaire désiré est calculé ;
(d) le nombre calculé de seconds trous supplémentaires est réalisé dans la surface de palier.

2. Procédé selon la revendication 1, **caractérisé en ce que** le nombre inférieur de premiers trous est de l'ordre de la moitié du nombre calculé.

3. Procédé selon la revendication 1 ou 2, **caractérisé en ce que** le nombre inférieur de premiers trous est réalisé de manière à les répartir uniformément à 360° le long d'une ou plusieurs lignes circulaires dans la surface de palier, et le nombre de seconds trous supplémentaires avec les mêmes caractéristiques est réalisé avec un positionnement similaire le long d'une ou plusieurs lignes circulaires déplaçées axialement par rapport aux premiers trous.

4. Procédé selon la revendication 3, **caractérisé en ce qu'**une partie de la surface de palier dans laquelle les canaux perméables aux gaz doivent être réalisés est tournée et déplacée axialement par rapport à un faisceau stationnaire à haute énergie.

5. Procédé selon l'une quelconque des revendications précédentes, **caractérisé en ce que** le faisceau à haute énergie est un faisceau laser focalisé dirigé directement vers la surface de palier.

6. Procédé selon l'une quelconque des revendications 1 à 4, **caractérisé en ce que** le faisceau à haute énergie est un faisceau laser focalisé dirigé vers la surface de palier par une déflection au moyen d'un prisme, par exemple.
